# EUROPÄISCHE PATENTSCHRIFT

(11) **EP 2 667 053 B1**
(45) Veröffentlichungstag und Bekanntmachung des Hinweises auf die Patenterteilung: **23.08.2017**
(21) Anmeldenummer: 13166843.6
(22) Anmeldetag: 07.05.2013
(51) Int. Cl.: F16H 57/04, B60K 6/547, F16D 48/02, B60K 6/48, B60K 1/00

(54) **Kühlanordnung und Kühlverfahren für KFZ-Antriebsstrang**
Cooling assembly and cooling method for motor vehicle drive train
Agencement de refroidissement et procédé de refroidissement pour une chaîne cinématique de véhicule automobile

(30) Priorität: 21.05.2012 DE 102012010322
(43) Veröffentlichungstag der Anmeldung: 27.11.2013
(73) Patentinhaber: GETRAG B.V. & Co. KG, 74199 Untergruppenbach (DE)
(72) Erfinder: Ruehle, Guenter, 74369 Loechgau (DE); Schweiher, Mark, 74348 Lauffen (DE); Meissner, Joerg, 74626 Bretzfeld (DE)
(74) Vertreter: Witte, Weller & Partner Patentanwälte mbB

(56) Entgegenhaltungen:
- WO-A1-2005/123433
- WO-A1-2010/127659
- WO-A2-2011/082095
- DE-A1-102008 015 897
- DE-A1-102011 015 378
- JP-A- 2011 126 320

## Beschreibung

Die vorliegende Erfindung betrifft eine Kühlanordnung für einen Kraftfahrzeugantriebsstrang, der eine Reibkupplungsanordnung und eine elektrische Maschine aufweist.

Ferner betrifft die vorliegende Erfindung einen Antriebsstrang mit einer solchen Kühlanordnung, der eine Reibkupplungsanordnung und eine elektrische Maschine aufweist.

Auf dem Gebiet der Kraftfahrzeugantriebsstränge ist es bekannt, Komponenten fluidisch zu kühlen und/oder zu schmieren. Vorliegend soll der Begriff des Kühlens, soweit anwendbar, auch den Begriff des Schmierens beinhalten.

Beispielsweise bei Antriebssträngen mit Wandler-Automatikgetrieben müssen die darin enthaltenen Kupplungen/Bremsen geeignet gekühlt werden. Auf dem Gebiet der automatisierten Vorgelegegetriebe, wie automatisierte Schaltgetriebe und Doppelkupplungsgetriebe, ist die Verwendung von nasslaufenden Reibkupplungen wie nasslaufenden Lamellenkupplungen bekannt. Diese dienen als Anfahr- und Trennkupplungen und übertragen sowohl beim Anfahren als auch beim Schalten (bei Doppelkupplungsgetrieben) hohe Drehmomente. Daher ist es vorteilhaft, derartige Reibkupplungen zu kühlen.

Klassische Antriebsstränge beinhalten als Antriebsmotor einen Verbrennungsmotor. Dabei ist es bekannt, eine Pumpe über einen Nebenantrieb des Verbrennungsmotors zu betreiben. Die Pumpe kann beispielsweise zur Kühlung von Getriebekomponenten, zur Kühlung und/oder Schmierung von Getriebekomponenten, sowie zur Kühlung und/oder Schmierung von Reibkupplungsanordnungen verwendet werden.

Ferner besteht seit einigen Jahren ein Trend hin zu Hybrid-Antriebssträngen und rein elektrischen Antriebssträngen. In beiden Fällen weist der Antriebsstrang eine elektrische Maschine auf, die als weiterer Antriebsmotor oder als alleiniger Antriebsmotor einsetzbar ist. Auf dem Gebiet der Hybrid-Antriebsstränge kann die elektrische Maschine dabei so ausgelegt und angesteuert werden, dass sie lediglich unterstützend wirkt. Bei Voll-Hybrid-Antriebssträngen kann die elektrische Maschine jedoch auch als alternativer Antrieb eingesetzt werden, so dass neben einem rein verbrennungsmotorischen und einem gemischten Fahrbetrieb auch ein rein elektromotorischer Fahrbetrieb möglich ist.

Die WO 2005/123433 A1 beschreibt eine Doppelkupplung für einen Hybridantriebsstrang und ein Kühlverfahren. Ein Kraftübertragungselement für den Hybridantriebstrang weist eine elektrische Maschine, zwei Nasskupplungen und einen Schmierungs- und/oder Kühlungsfluidkreis auf. Der Schmierungs- und/oder Kühlungsfluidkreis weist wiederum eine Kammer zum Schmieren und/oder Kühlen der Kupplungen und des Elektromotors, einen Vorratsbehälter für Schmierungs- und/oder Kühlungsfluid und wenigstens eine Pumpe, die einerseits mit dem Vorratsbehälter und andererseits mit der Kammer verbunden ist, auf. Die Pumpe ist außerdem mit einem Rückführungskanal der Kammer verbunden, wobei der Schmierungs- und/oder Kühlungskreis Auswahlmittel enthält, die auf der Einlassseite der Pumpe angeordnet sind, derart, dass die Pumpe die Kammer in Abhängigkeit von der Temperatur des sich durch die Auswahlmittel bewegenden Fluids wahlweise mit unter Druck stehendem Fluid von dem Vorratsbehälter oder von dem Rückführungskanal versorgen kann.

Die DE 10 2008 015 897 A1 betrifft eine Betriebsmittelvorrichtung mit zumindest einer ersten Betriebsmitteleinheit, die für eine Kühlung eines Hybridantriebsmoduls vorgesehen ist, und einer zweiten Betriebsmitteleinheit, die für eine Betriebsmittelversorgung eines Anfahrmoduls vorgesehen ist. Dabei sind die erste Betriebsmitteleinheit und die zweite Betriebsmitteleinheit zumindest teilweise einstückig ausgeführt.

Die DE 10 2011 015378 A1 beschreibt eine Kraftfahrzeuggetriebevorrichtung mit zumindest einem Betriebsmitteldrucksystem, das zur Schmierung, Kühlung und/oder Betätigung von zumindest einem Getriebeschaltelement vorgesehen ist, und mit zumindest einer Trenneinheit, die dazu vorgesehen ist, eine Hauptpumpe von dem Betriebsmitteldrucksystem strömungstechnisch zu trennen. Die Trenneinheit weist zumindest eine Rückschlagklappe auf, die dazu vorgesehen ist, einen Betriebsmittelfluss von dem Betriebsmitteldrucksystem in Richtung Hauptpumpe zu verhindern.

Ferner ist aus der JP 2011 126 320 A eine Kupplungs- und Motorgehäusestruktur eines Hybridfahrzeugs bekannt.

Vor dem obigen Hintergrund ist es eine Aufgabe der Erfindung, eine verbesserte Kühlanordnung für einen Kraftfahrzeugantriebsstrang, einen verbesserten Antriebsstrang anzugeben, wobei ein Kühlkonzept realisierbar ist, das in sämtlichen Fahrsituationen eine hinreichende Kühlung und/oder Schmierung von Komponenten ermöglicht und konstruktiv einfach realisierbar ist.

Diese Aufgabe wird zum einen gelöst durch eine Kühlanordnung für einen Kraftfahrzeugantriebsstrang, der eine Reibkupplungsanordnung und eine elektrische Maschine aufweist, mit einem Kühlfluidkreis, der eine Pumpenanordnung zum Fördern von Fluid und eine Fluidverteilungseinrichtung aufweist, wobei der Kühlfluidkreis so ansteuerbar ist, dass gefördertes Fluid der Reibkupplungsanordnung und/oder der elektrischen Maschine bedarfsweise zuführbar ist, wobei die Pumpenanordnung eine Kupplungspumpe und eine Maschinepumpe aufweist, die von einem einzelnen Elektromotor angetrieben sind.

Ferner wird die obige Aufgabe gelöst durch einen Antriebsstrang für ein Kraftfahrzeug mit einer solchen Kühlanordnung.

Unter einem bedarfsweise Zuführen von Fluid zu der Reibkupplungsanordnung und/oder zu der elektrischen Maschine wird in einer Variante vorliegend verstanden, dass das Fluid entweder der elektrischen Maschine oder der Reibkupplungsanordnung zugeführt wird. In einer alternativen Variante ist vorgesehen, dass ein geförderter Fluidstrom auf die Reibkupplungsanordnung und die elektrische Maschine aufgeteilt wird. Die Aufteilung kann dabei ebenfalls bedarfsweise erfolgen.

Der Bedarf einer Komponente des Antriebsstranges nach Kühlleistung richtet sich insbesondere, jedoch nicht ausschließlich, nach der Temperatur der jeweiligen Komponente. Daher ist vorzugsweise vorgesehen, dass der Reibkupplungsanordnung und/oder der elektrischen Maschine ein Temperatursensor zugeordnet ist. Als weiterer Bedarfsparameter kommt die von der jeweiligen Komponente übertragene Leistung, also beispielsweise das über die Reibkupplungsanordnung übertragene Drehmoment und/oder das von der elektrischen Maschine bereitgestellte oder aufgenommene Drehmoment, in Betracht.

Insgesamt kann ein Kühlkonzept für einen Hybrid-Antriebsstrang bereitgestellt werden, der auch rein elektrisches Fahren ermöglicht (Voll-Hybrid). Dabei ist es bevorzugt möglich, dass in sämtlichen Fahrsituationen eine Kühlung und/oder Schmierung der relevanten Komponenten ermöglicht wird.

Im Gegensatz zu bekannten Antriebssträngen, bei denen eine Kühlölpumpe ausschließlich über einen Nebenantrieb des Verbrennungsmotors angetrieben wird, ist durch die bedarfsweise Zuführbarkeit von Fluid auch ein Kühlen von Komponenten des Antriebsstranges möglich, wenn ein rein elektrischer Fahrbetrieb eingerichtet ist, bei dem der Verbrennungsmotor "steht". Die Pumpenanordnung wird daher vorzugsweise mittels eines von dem Verbrennungsmotor unabhängigen Antriebs angetrieben bzw. kann zusätzlich zu einem Nebenantrieb durch einen unabhängigen Antrieb angetrieben sein.

Die Aufgabe wird somit vollkommen gelöst.

Gemäß einer besonders bevorzugten Ausführungsform weist die Fluidverteilungsanordnung eine Ventilverteilungsanordnung auf.

Hierbei wird davon ausgegangen, dass die Pumpenanordnung Kühlfluid fördert und die Ventilverteilungsanordnung das so geförderte Fluid bedarfsweise verteilt, also beispielsweise ausschließlich der Reibkupplungsanordnung, ausschließlich der elektrischen Maschine und/oder beiden Komponenten gleichzeitig zuführt. Bei gleichzeitiger Zuführung von Fluid zu zwei oder mehr Komponenten eines Antriebsstranges ist es bevorzugt, wenn die Pumpenanordnung und/oder die Fluidverteilungseinrichtung so ansteuerbar sind, dass die Fluidströme jeweils geeignet eingestellt werden können, vorzugsweise in einem beliebigen Verhältnis zwischen 0% / 100% bis 100% / 0%.

Von besonderem Vorzug ist es dabei, wenn die Ventilverteilungsanordnung ein proportionales Wegeventil aufweist, das einen geförderten Fluidvolumenstrom bedarfsweise auf die Reibkupplungsanordnung und die elektrische Maschine aufteilt. Die Aufteilung kann wiederum in dem oben beschriebenen Bereich liegen und beliebige Werte dazwischen annehmen.

Es versteht sich, dass die Kühlanordnung vorzugsweise von einer Steuereinrichtung angesteuert wird, die vorzugsweise mit Sensoren verbunden ist, die Zustände/Parameter von Komponenten des Antriebsstranges erfassen, um eine bedarfsgerechte Verteilung bzw. Aufteilung zu ermöglichen. Die Steuereinrichtung kann dabei eine ausschließlich der Kühlanordnung zugeordnete Steuereinrichtung sein, kann jedoch auch eine der Anordnung aus Reibkupplungsanordnung, elektrischer Maschine und einem Getriebe zugeordnete Steuereinheit (Getriebesteuereinheit) sein. Ferner ist es möglich, dass die Steuereinheit in eine übergeordnete Steuereinrichtung für den gesamten Antriebsstrang integriert ist.

Von besonderem Vorzug ist es insgesamt, wenn die Pumpenanordnung eine Elektromotorpumpe aufweist, die von einem Elektromotor angetrieben ist.

Durch eine derartige Elektromotorpumpe kann eine von dem Betriebszustand eines Verbrennungsmotors unabhängige Betriebsweise der Pumpenanordnung realisiert werden, so dass eine Kühlung beispielsweise der elektrischen Maschine auch bei einem rein elektrischen Fahrbetrieb möglich ist. Es versteht sich, dass der die Elektromotorpumpe antreibende Elektromotor eine von der elektrischen Maschine separate elektrische Maschine ist, die vorzugsweise ausschließlich im Elektromotorbetrieb betrieben wird, wohingegen die elektrische Maschine vorzugsweise sowohl elektromotorisch (zum Antrieb) als auch elektrogeneratorisch betrieben werden kann.

Gemäß einer weiteren bevorzugten Ausführungsform weist die Pumpenanordnung eine Nebenantriebspumpe auf, die von einem Antriebsmotor des Antriebsstranges angetrieben ist.

Bei dieser Ausführungsform kann die Nebenantriebspumpe eine bedarfsgerechte Verteilung von Fluid auf Komponenten des Antriebsstranges insbesondere dann gewährleisten, wenn der Antriebsmotor im Betrieb ist, bei dem es sich insbesondere um einen Verbrennungsmotor handeln kann.

Gemäß einer bevorzugten Variante weist die Pumpenanordnung sowohl eine Elektromotorpumpe als auch eine Nebenantriebspumpe auf. In diesem Fall ist es bevorzugt, wenn ein Druckanschluss der Elektromotorpumpe über ein Rückschlagventil mit einem Druckanschluss der Nebenantriebspumpe verbunden ist.

Die Elektromotorpumpe kann dabei autonom durch den Elektromotor unabhängig angesteuert werden. Insbesondere kann die Drehzahl der Elektromotorpumpe individuell und unabhängig von anderen Komponenten mittels des Elektromotors bedarfsorientiert eingestellt werden.

Die Fördervolumina der beiden Pumpen werden vorzugsweise in einem gemeinsamen Pfad aufsummiert, wobei das Rückschlagventil oder eine Rückschlagventilanordnung verhindert, dass ungewollte Volumenströme auftreten, beispielsweise in die Elektromotorpumpe hinein.

Ferner ist es insgesamt vorteilhaft, wenn der Antriebsstrang ein Getriebe aufweist und wenn der Kühlfluidkreis so ausgebildet ist, dass Fluid, welches die elektrische Maschine durchlaufen hat, dem Getriebe zum Schmieren und/oder Kühlen von wenigstens einem Getriebeglied zugeführt wird.

Das Getriebeglied kann beispielsweise ein Radsatz und/oder ein Lager des Getriebes sein.

Bei dieser Variante ist es möglich, den gesamten Kühlhaushalt des Antriebsstranges über einen einzelnen Fluidtyp zu realisieren, also beispielsweise über einen gemeinsamen Ölsumpf. Das Fluid kann dabei sowohl zum Kühlen als auch zum Schmieren ausgelegt sein.

Bei dieser Variante ist ein Abdichten von zwei unterschiedlichen Fluiden (Medien) gegeneinander in dem Antriebsstrang nicht nötig. Hierdurch wird eine geringe Anzahl an Bauteilen benötigt, und damit einhergehend eine geringere Anzahl von Dichtringen und folglich ein geringeres Schleppmoment und somit ein geringerer Verbrauch des Kraftfahrzeuges. Die nicht notwendige Medientrennung innerhalb des Antriebsstranges senkt zudem das Risiko von Reklamationen, da bei doppelten Dichtungen die Gefahr eines Ausfalls, beispielsweise schon in Folge von Montagefehlern, hoch sein kann.

Ferner kann der gesamte Fluidpegel abgesenkt werden, da eine Schmierung von Getriebegliedern wie Radsätzen nicht nur durch Planschen (Tauchschmierung) sondern auch durch "Träufeln" möglich ist. Hierbei kann beispielsweise das aus der elektrischen Maschine austretende Fluid von oben auf Radsätze des Getriebes "geträufelt" werden. Hierdurch können sich eine Verbesserung des Wirkungsgrades sowie eine Gewichtsreduktion ergeben. Vorteilhaft ist es bei dieser Variante, wenn die elektrische Maschine in Gravitationsrichtung oberhalb des Getriebes sowie oberhalb entsprechender Ölleitvorrichtungen angeordnet ist.

Gemäß einer weiteren insgesamt bevorzugten Ausführungsform weist der Kühlfluidkreis einen Fluidkühler auf, in den das von der Pumpenanordnung geförderte Fluid führbar ist.

Bei dieser Ausführungsform kann das Fluid vor dem Zuführen zu der Reibkupplungsanordnung, zu der elektrischen Maschine und/oder zu dem Getriebe gekühlt werden.

Dabei ist es von besonderem Vorzug, wenn der Kühlfluidkreis einen Bypassabschnitt zum bedarfsweisen Umgehen des Fluidkühlers aufweist.

Bei dieser Variante kann der Wirkungsgrad ebenfalls erhöht werden, da bei kaltem Fluid der Kühler umgangen werden kann, wodurch sich der Wirkungsgrad des Antriebsstranges erhöht. Bei erhöhten Fluidtemperaturen kann hingegen der Bypassabschnitt geschlossen sein, so dass das Fluid durch den Fluidkühler strömt und folglich eine hinreichende Kühlleistung für die Komponenten des Antriebsstranges bereitgestellt werden kann.

Wie oben erläutert, kann der Kühlfluidkreis so ausgelegt sein, dass von der Pumpenanordnung ein Fluidvolumenstrom bereitgestellt wird, der von einer Ventilverteilungsanordnung auf Komponenten bedarfsweise aufgeteilt wird.

Da ist es von besonderem Vorzug, wenn die Pumpenanordnung nur eine Elektromotorpumpe aufweist, die von einem Elektromotor angetrieben ist (und ggf. noch eine Nebenantriebspumpe). Hierdurch kann die Anzahl der Bauteile der Kühlanordnung reduziert werden.

Generell ist es jedoch auch denkbar, dass die Pumpenanordnung einen Volumenstrom speziell für die Reibkupplungsanordnung und einen weiteren Volumenstrom speziell für die elektrische Maschine bereitstellt.

Eine derartige Variante wird vorzugsweise realisiert, wenn die Pumpenanordnung eine bidirektionale Pumpe aufweist, wobei die Fluidverteilungseinrichtung eine mit Anschlüssen der Pumpe verbundene Ventilanordnung aufweist, derart, dass Kühlfluid in der einen Förderrichtung der Reibkupplungsanordnung und in der anderen Förderrichtung der elektrischen Maschine zuführbar ist.

Bei dieser Variante können durch Drehrichtungsumkehr entweder die Reibkupplungsanordnung oder die elektrische Maschine mit Kühlfluid versorgt werden, je nach Förderrichtung eines Elektromotors der bidirektionalen Pumpe. Die Förderrichtung kann vorzugsweise durch einen Elektromotor eingestellt werden, dessen Drehrichtung zur Änderung der Förderrichtung der bidirektionalen Pumpe umgekehrt wird.

Die Ventilanordnung kann dabei vorzugsweise aus einfachen Rückschlagventilen hergestellt sein, so dass die Verwendung eines Proportionalventiles nicht erforderlich ist (das in der Regel teurer, schmutzempfindlicher und ggf. aufwendiger zu montieren ist).

Insbesondere ist es möglich, dass die Ventilanordnung ein Rückschlagventil aufweist, das einen ersten Druckanschluss der Pumpe mit einem Fluidreservoir verbindet und ein zweites Rückschlagventil aufweist, das diesen Druckanschluss mit einer Kupplungsfluidleitung verbindet. Dabei ist es ferner bevorzugt, wenn der andere Druckanschluss der Pumpe über ein drittes Rückschlagventil mit dem Fluidreservoir verbunden ist, und über ein viertes Rückschlagventil mit einer Maschinen-Fluidleitung.

Erfindungsgemäß weist die Pumpenanordnung eine Kupplungspumpe und eine Maschinenpumpe auf, die von einem einzelnen Elektromotor angetrieben sind.

Bei dieser Ausführungsform ist ein Druckanschluss der Kupplungspumpe vorzugsweise mit einer Kupplungs-Fluidleitung zu der Reibkupplungsanordnung verbunden, und ein Druckanschluss der Maschinenpumpe ist vorzugsweise mit einer Maschinen-Fluidleitung zu der elektrischen Maschine verbunden. Die Kupplungspumpe und die Maschinenpumpe können bei dieser Ausführungsform als unidirektionale Pumpen ausgebildet sein.

Durch Änderung der Drehrichtung des Elektromotors kann dabei entweder die Kupplungspumpe oder die Maschinenpumpe in Fluidförderrichtung angetrieben werden, wobei der jeweilige andere Zweig dann ggf. Luft aus dem zugeordneten Verbraucher fördert und diese durch ein Ansaugsieb in das Fluidreservoir fördern kann.

Da Luft eine gegenüber Fluiden wie Öl wesentlich geringere Viskosität aufweist, benötigt diese Förderrichtung nur eine sehr geringe hydraulische Leistung und kann in der Auslegung des Elektromotors im Wesentlichen vernachlässigt werden.

Die Kupplungspumpe und die Maschinenpumpe können identisch aufgebaut sein, können jedoch auch unterschiedliche Förderleistungen besitzen.

Gemäß einer weiteren insgesamt bevorzugten Ausführungsform weist der Kühlfluidkreis eine zu der Reibkupplungsanordnung führende Kupplungs-Fluidleitung und eine zu der elektrischen Maschine führende Maschinen-Fluidleitung auf, wobei die Kupplungs-Fluidleitung und die AAaschinen-Fluidleitung über eine Blendenanordnung miteinander verbunden sind.

Bei dieser Ausführungsform ist es insbesondere für den Fall, dass die Volumenströme in der Kupplungs-Fluidleitung und in der Maschinen-Fluidleitung mittels einer Pumpenanordnung alternativ eingestellt werden, wie bei der Ausführungsform mit bidirektionaler Pumpe und wie bei der Ausführungsform mit Kupplungspumpe/Maschinenpumpe, möglich, die Ausschließlichkeit der Zuführung von Fluid zu der einen Komponente oder zu der anderen Komponente aufzuheben.

Vielmehr kann über die Blendenanordnung erreicht werden, dass beispielsweise bei Zuführung von Fluid zu der Reibkupplungsanordnung ein kleiner Volumenstrom über die Blendenanordnung hin in die Maschinen-Fluidleitung führt. Alternativ oder zusätzlich kann die Blendenanordnung bei einer Kühlung der elektrischen Maschine dafür sorgen, dass ein kleinerer Volumenstrom auch in die Reibkupplungsanordnung strömt. Die Blendenanordnung kann dabei in den beiden Richtungen symmetrisch aufgebaut sein, kann jedoch auch unsymmetrisch aufgebaut sein, beispielsweise durch zwei parallele Blenden, wobei in den einen Blendenzweig ein Rückschlagventil integriert ist.

In sämtlichen Varianten können hydraulische Rückschlagventilanordnungen enthalten sein, um die Leitungen zu den zu kühlenden Komponenten mit Fluid gefüllt zu halten.

Ferner ist es in allen Varianten bevorzugt, wenn aus der elektrischen Maschine austretendes Fluid zur Schmierung wenigstens eines Radsatzes genutzt wird und hierzu keine separaten Komponenten verbaut werden.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges eines Kraftfahrzeuges mit einer Ausführungsform einer Kühlanordnung, die nicht unter den Wortlaut des Anspruchs 1 fällt;
- Fig. 2: eine schematische Darstellung einer Ausführungsform eines Kraftfahrzeugantriebsstranges;
- Fig.: 3 eine schematische Anordnung einer weiteren Ausführungsform einer Kühlanordnung, die nicht unter den Wortlaut des Anspruchs 1 fällt;
- Fig. 4: eine schematische Darstellung einer weiteren Ausführungsform einer Kühlanordnung, die nicht unter den Wortlaut des Anspruchs 1 fällt;
- Fig. 5: eine schematische Darstellung einer weiteren Ausführungsform einer Kühlanordnung, die nicht unter den Wortlaut des Anspruchs 1 fällt; und
- Fig. 6: eine schematische Darstellung einer Ausführungsform einer erfindungsgemäßen Kühlanordnung.

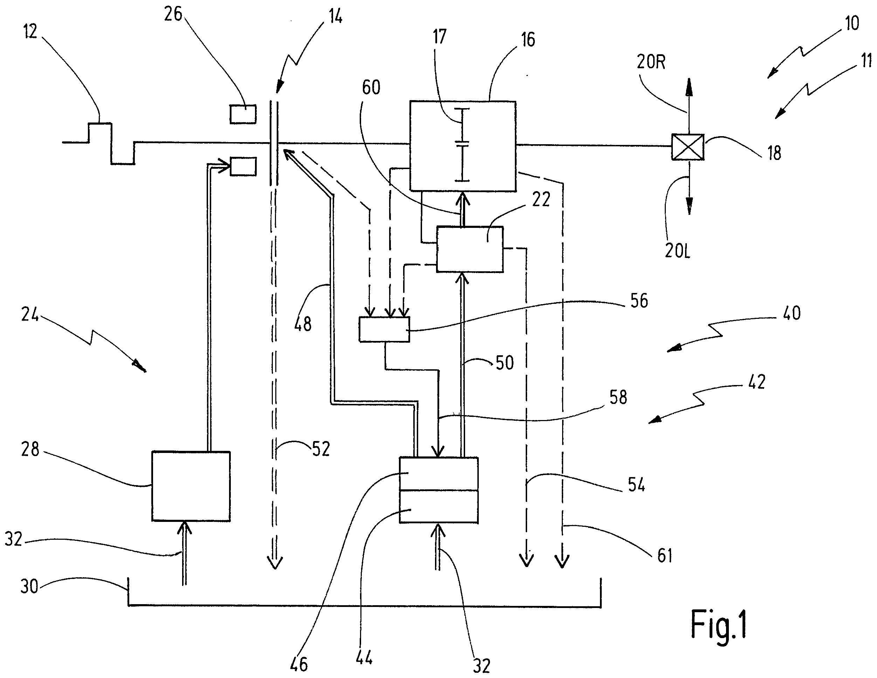

In Fig. 1 ist in schematischer Form ein beispielhafter Antriebsstrang 10 für ein Kraftfahrzeug 11 dargestellt.

Der Antriebsstrang 10 beinhaltet einen Antriebsmotor 12 wie einen Verbrennungsmotor. Ferner weist der Antriebsstrang 10 eine Reibkupplungsanordnung 14 auf, deren Eingang mit dem Antriebsmotor 12 verbunden ist und deren Ausgang mit einem Getriebe 16 verbunden ist. Das Getriebe 16 kann beispielsweise ein automatisiertes Vorgelegegetriebe sein, wie beispielsweise ein automatisiertes Schaltgetriebe oder ein Doppelkupplungsgetriebe. Das Getriebe kann jedoch auch ein stufenloses Getriebe oder ein Wandler-Automatikgetriebe sein. Die Reibkupplungsanordnung 14 kann eine einfache Reibkupplung oder eine Doppelkupplung beinhalten. Die Reibkupplungsanordnung 14 ist vorzugsweise eine lastschaltfähige Kupplung und ist insbesondere eine nasslaufende Reibkupplung wie eine nasslaufende Lamellenkupplung.

Das Getriebe 16 weist ein Getriebeglied 17 wie beispielsweise einen Radsatz, ein Lager oder dergleichen auf.

Ein Ausgang des Getriebes 16 ist mit einem Differenzial 18 verbunden, das Antriebsleistung auf zwei angetriebene Räder 20L, 20R des Kraftfahrzeuges 11 verteilt.

Ferner beinhaltet der Antriebsstrang 10 eine elektrische Maschine 22, die im vorliegenden Fall an einen Eingang und/oder an einen Ausgang des Getriebes 16 angebunden ist. Die Anbindung kann dabei eine Starranbindung sein, es kann sich jedoch auch um eine schaltbare Anbindung handeln, beispielsweise über eine Zuschaltkupplung oder dergleichen.

Mittels des Antriebsstranges 10 ist es möglich, das Kraftfahrzeug 11 rein verbrennungsmotorisch anzutreiben. Ferner ist vorzugsweise ein rein elektrischer Fahrbetrieb mittels der elektrischen Maschine 22 möglich. Ferner ist vorzugsweise ein gemischter Antrieb möglich, bei dem Antriebsleistung sowohl von dem Verbrennungsmotor 12 als auch von der elektrischen Maschine 22 bereitgestellt wird. Schließlich ist es vorzugsweise möglich, in einem Schubbetrieb die elektrische Maschine 22 rekuperierend zu betreiben. Ferner können weitere vorteilhafte Ausgestaltungen eines solchen Hybrid-Antriebsstranges 10 realisiert werden, wie beispielsweise ein elektrisches Anfahren oder dergleichen.

Die elektrische Maschine 22 kann in einer Variante auch einer zweiten Achse des Kraftfahrzeuges 11 zugeordnet sein, um auf diese Weise einen Allrad-Antriebsstrang bereitzustellen.

Der Antriebsstrang 10 ist vorzugsweise ein automatisierter Antriebsstrang. Vorzugsweise wird das Getriebe 16 automatisiert betätigt, wozu beispielsweise Schaltkupplungen mittels geeigneter Aktuatoren betätigt werden. Die Aktuatoren können beispielsweise hydraulische Aktuatoren sein, können jedoch auch elektromechanische Aktuatoren wie Schaltwalzen sein.

Ferner wird auch die Reibkupplungsanordnung 14 automatisiert betätigt. Zu diesem Zweck ist eine fluidische Aktuatoranordnung 24 vorgesehen. Die Aktuatoranordnung 24 beinhaltet einen Fluidaktuator 26, der beispielsweise einen oder mehrere Hydraulikzylinder oder dergleichen beinhalten kann. Ferner weist die Aktuatoranordnung 24 eine Fluidquelle 28 auf, die ein Fluid 32 aus einem Tank bzw. Reservoir 30 fördert und das Fluid mit einem geeigneten Druck dem Fluidaktuator 26 zur Verfügung stellt, um auf diese Weise eine Kupplung der Reibkupplungsanordnung 14 zu öffnen, zu schließen oder schlupfend zu betreiben.

Es versteht sich, dass zum Zwecke der automatisierten Ansteuerung der Reibkupplungsanordnung 14 und des Getriebes 16 eine Steuereinrichtung vorgesehen ist (Getriebesteuereinrichtung).

Der Antriebsstrang 10 beinhaltet ferner eine Kühlanordnung 40, die einen Kühlfluidkreis 42 einrichtet.

Der Kühlfluidkreis 42 beinhaltet eine Pumpenanordnung 44 und eine Fluidverteilungseinrichtung 46. Die Pumpenanordnung 44 fördert Fluid 32 aus dem gleichen Reservoir 30 wie die Aktuatoranordnung 24. Der Kühlfluidkreis 42 ist dazu ausgelegt, die Reibkupplung(en) der Reibkupplungsanordnung 14 mit Fluid zum Zwecke des Kühlens und/oder Schmierens zu versorgen. Ferner ist der Kühlfluidkreis 42 dazu ausgelegt, die elektrische Maschine 22 mit Fluid zum Zwecke des Kühlens der elektrischen Maschine 22 (und/oder zum Zwecke des Schmierens von Lagern der elektrischen Maschine 22) zu versorgen.

Die Pumpenanordnung 44 und die Fluidverteilungseinrichtung 46 sind über eine Kupplungs-Fluidleitung 48 mit der Reibkupplungsanordnung 14 verbunden. Ferner verbindet eine Maschinen-Fluidleitung 50 die Pumpenanordnung 44 und die Fluidverteilungseinrichtung 46 mit der elektrischen Maschine 22. Bei 52 ist schematisch ein Rückfluss von Fluid aus der Reibkupplungsanordnung 14 in das Reservoir 30 dargestellt. Bei 54 ist schematisch ein Rückfluss von Fluid aus der elektrischen Maschine 22 zurück in das Reservoir 30 dargestellt.

Die Kühlanordnung 40 beinhaltet ferner eine Steuereinrichtung 56. Die Steuereinrichtung 56 ist dazu eingerichtet, den Zustand des Antriebsstranges zu erfassen, insbesondere zum Zwecke des Überwachens des Kühlmanagements bzw. Kühlkonzeptes. Zu diesem Zweck ist angedeutet, dass die Steuereinrichtung 56 mit der Reibkupplungsanordnung 14, dem Getriebe 16 und/oder der elektrischen Maschine 22 gekoppelt sein kann, derart, dass Daten über den Zustand dieser Komponenten der Steuereinrichtung 56 zugeführt werden können, wie beispielsweise die jeweiligen Temperaturen und/oder die jeweiligen Leistungsdaten.

Die Steuereinrichtung 56 ermittelt hieraus einen Kühlfluidbedarf für zumindest die Reibkupplungsanordnung 14 und die elektrische Maschine 22. Die Steuereinrichtung 56 steuert die Pumpenanordnung 44 und/oder die Fluidverteilungseinrichtung 46 an, um eine bedarfsweise Verteilung von Fluid 32 zum Zwecke des Kühlens auf die Reibkupplungsanordnung 14 und die elektrische Maschine 22 einzurichten, wie es schematisch bei 58 gezeigt ist.

Die Verteilung des Fluides 30 kann dabei so erfolgen, dass entweder der Reibkupplungsanordnung 14 oder der elektrischen Maschine 22 Fluid bereitgestellt wird. Bevorzugt erfolgt die Verteilung jedoch so, dass ein Fluidvolumenstrom bedarfsweise aufgeteilt wird, vorzugsweise in einem beliebigen Verhältnis von 0% / 100% bis 100% / 0%.

Wie nachstehend noch erläutert werden wird, kann durch eine Blendenanordnung auch erreicht werden, dass eine Aufteilung in einem Verhältnis von beispielsweise 5% / 95% bis 95% / 5% oder dergleichen eingerichtet wird. Durch die Ansteuerung der Pumpenanordnung 44 kann der geförderte Fluidvolumenstrom eingestellt werden.

Anstelle eines Rückflusses 54 aus der elektrischen Maschine 22 zurück in das Reservoir 30 ist es auch möglich, dass Fluid, das die elektrische Maschine 22 durchlaufen hat, dem Getriebe 16 zum Schmieren bereitzustellen. Zu diesem Zweck ist vorzugsweise eine Schmierölleitung 60 vorgesehen, die die elektrische Maschine 22 mit dem Getriebe 16 verbindet. Die Schmierung des Getriebes 16 erfolgt dabei vorzugsweise durch eine Träufelschmierung, wobei Fluid beispielsweise auf einen sich drehenden Radsatz des Getriebes 16 geträufelt wird. In diesem Fall ist ein Getrieberückfluss 61 vorgesehen, über den das dem Getriebe 16 zugeführte Fluid zurück in das Reservoir 30 geführt wird. Das Reservoir 30 kann hierbei ein Ölsumpf des Getriebes 16 sein.

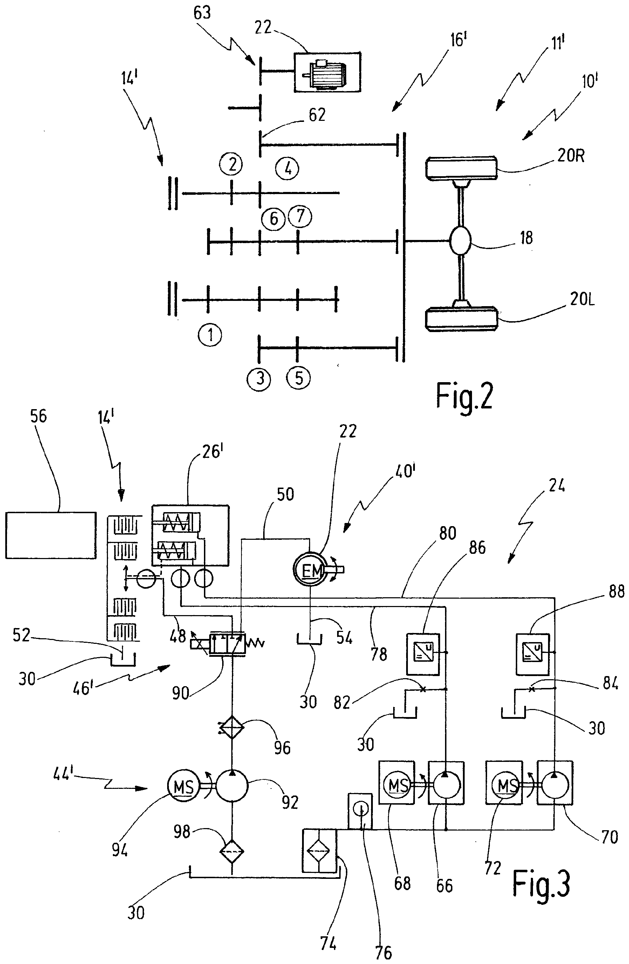

In Fig. 2 ist eine beispielhafte Ausgestaltung eines Antriebsstranges 10' für ein Kraftfahrzeug 11' dargestellt. Der Antriebsstrang 10' entspricht generell hinsichtlich Aufbau und Funktionsweise dem Antriebsstrang 10 der Fig. 1. Gleiche Elemente sind daher durch gleiche Bezugszeichen gekennzeichnet. Im Folgenden werden im Wesentlichen die Unterschiede erläutert.

So ist zu erkennen, dass die Reibkupplungsanordnung 14' eine erste und eine zweite nasslaufende Lamellenkupplung aufweist und dass das Getriebe 16' als Doppelkupplungsgetriebe mit zwei Eingangswellen ausgebildet ist. Das Getriebe 16' ist dabei in Vorgelegebauweise ausgeführt und weist zur Einrichtung einer Mehrzahl von wenigstens drei Vorwärtsgangstufen (1 bis 7) jeweilige Radsätze auf, die Eingangswellen des Getriebes 16' mit Ausgangswellen verbinden. Die Ausgangswellen bzw. Vorgelegewellen können über einen Radsatz mit einem Eingangsglied des Differenzials 18 verbunden sein. Auch eine Direktgangstufe ist ggf. einrichtbar.

In Fig. 2 ist gezeigt, dass die elektrische Maschine 22 über einen Radsatz an das Getriebe 16' angebunden sein kann, beispielsweise an ein Losrad 62 eines Gangradsatzes des Getriebes 16'. Das Losrad 62 ist dabei vorzugsweise einer mittleren Gangstufe des Getriebes 16' zugeordnet, insbesondere der dritten oder der vierten Gangstufe des Getriebes 16'.

In den nachfolgenden Fig. 3 bis 6 sind weitere Ausführungsformen von Kühlanordnungen dargestellt, die hinsichtlich Aufbau und Funktionsweise generell der Kühlanordnung 40 der Fig. 1 entsprechen. Gleiche Elemente sind daher durch gleiche Bezugszeichen gekennzeichnet. Im Folgenden werden im Wesentlichen die Unterschiede erläutert.

Fig. 3 zeigt einen Kühlkreis 40' und zeigt ferner eine Ausführungsform einer Aktuatoranordnung 24.

Die Aktuatoranordnung 24 weist im vorliegenden Fall eine erste Aktuatorpumpe 66 auf, die mittels eines ersten elektrischen Aktuatormotors 68 angetrieben wird. Ferner beinhaltet die Aktuatoranordnung 24 eine zweite Aktuatorpumpe 70, die mittels eines zweiten elektrischen Aktuatormotors 72 angetrieben wird.

Die Aktuatorpumpen 66, 70 sind mit ihren Sauganschlüssen mit dem Reservoir 30 verbunden, vorzugsweise über ein Fluidfilter 74. An diese Saugleitung kann ein Temperatursensor 76 angeschlossen sein, der vorzugsweise mit der in Fig. 1 gezeigten Steuereinrichtung 56 verbunden ist.

Die Reibkupplungsanordnung 14' weist zwei Reibkupplungen in Form von nasslaufenden Lamellenkupplungen auf, die mittels zweier Hydraulikzylinder eines Fluidaktuators 26' unabhängig voneinander betätigbar sind. Zu diesem Zweck ist ein Druckanschluss der ersten Aktuatorpumpe 66 über eine erste Aktuatorleitung 78 mit dem Fluidaktuator 26' verbunden, und ein Druckanschluss der zweiten Aktuatorpumpe 70 ist über eine zweite Aktuatorleitung 80 mit dem Fluidaktuator 26' verbunden. Die erste Aktuatorleitung 78 ist über eine erste Blende 82 mit dem Reservoir 30 verbunden. Die zweite Aktuatorleitung 80 ist über eine zweite Blende 84 mit dem Reservoir 30 verbunden. An die erste Aktuatorleitung 78 ist ein erster Drucksensor 86 angeschlossen. An die zweite Aktuatorleitung 80 ist ein zweiter Drucksensor 88 angeschlossen. Der Druck in den Hydraulikzylindern des Fluidaktuators 26' wird durch Einrichten einer geeigneten Drehzahl der jeweiligen elektrischen Aktuatormotoren 68, 72 eingerichtet, wobei die Blenden 82, 84 für eine gute Regelbarkeit sorgen.

Die Kühlanordnung 14' weist bei der Ausführungsform der Fig. 3 eine Ventilverteilungsanordnung in Form eines proportionalen Wegeventils 90 auf, das als 3/2-Wegeventil ausgebildet ist. Das Wegeventil 90 ist mittels der Steuereinrichtung 56 elektromagnetisch ansteuerbar. Ein Eingang des Wegeventils 90 ist mit einem Ausgang der Pumpenanordnung 44' verbunden. Ein erster Ausgang des Wegeventils 90 ist mit der Reibkupplungsanordnung 14' über eine Kupplungs-Fluidleitung 48 verbunden. Ein zweiter Ausgang des Wegeventils 90 ist über eine Maschinen-Fluidleitung 50 mit der elektrischen Maschine 22 verbunden, die wiederum über einen Maschinen-Rückfluss 54 mit dem Tank 30 verbunden ist (oder über eine Schmierleitung 60 mit dem Getriebe 16; in Fig. 3 nicht dargestellt).

Die Pumpenanordnung 44' weist im vorliegenden Fall eine unidirektionale Elektromotorpumpe 92 auf, die mittels eines Elektromotors 94 angetrieben ist. Ein Sauganschluss der Elektromotorpumpe 92 ist vorzugsweise über ein Filter 98 mit dem Reservoir 30 verbunden. Ein Druckanschluss der Pumpe 92 ist vorzugsweise über einen Fluidkühler 96 mit dem Eingang des Wegeventils 90 verbunden.

Über die Drehzahl des Elektromotors 94 wird ein geeigneter Volumenstrom am Druckanschluss der Elektromotorpumpe 92 zur Verfügung gestellt. Über das Wegeventil 90 wird dieser Volumenstrom bedarfsweise auf die Kupplungs-Fluidleitung 48 und die Maschinen-Fluidleitung 50 aufgeteilt, so dass die Reibkupplungsanordnung 14 und die elektrische Maschine 22 bedarfsweise mit Fluid versorgt und folglich gekühlt werden.

In die Ermittlung des jeweiligen Bedarfs können eingehen die Zustände der jeweiligen Komponenten, d.h. Temperaturen und/oder Leistungsübertragungsdaten der Reibkupplungsanordnung 14' und/oder der elektrischen Maschine 22. Ferner kann in den Bedarf die Temperatur des Fluides in dem Reservoir 30 eingehen, die über den Temperatursensor 76 ermittelt wird.

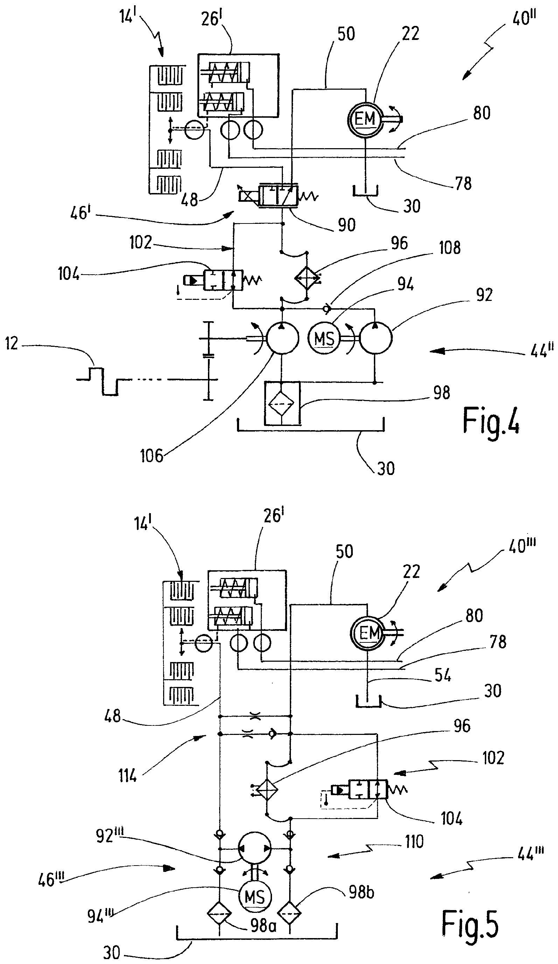

In den folgenden Fig. 4 bis 6 werden weitere Ausführungsformen von Kühlanordnungen beschrieben, die hinsichtlich Aufbau und Funktionsweise generell der Kühlanordnung 40' der Fig. 3 entsprechen. Gleiche Elemente sind daher durch gleiche Bezugszeichen gekennzeichnet. Im Folgenden werden im Wesentlichen die Unterschiede erläutert.

Bei der in Fig. 4 gezeigten Kühlanordnung 40" ist ein Ausgang der Pumpenanordnung 44" über einen Fluidkühler 96 mit einem Eingang des Wegeventils 90 verbunden. Ferner ist parallel zu dem Fluidkühler 96 ein Bypassabschnitt 102 vorgesehen, in dem ein Bypassventil 104 angeordnet ist, das als einfaches 2/2-Wegeventil ausgebildet sein kann.

In einer Grundstellung des Bypassventils 104 ist hierbei der Druckanschluss der Pumpenanordnung 44" über das Bypassventil 104 mit dem Eingang des Wegeventils 90 verbunden. Da der Fluidkühler 96 einen höheren hydraulischen Widerstand aufweist, wird Fluid folglich im Wesentlichen direkt dem Eingang des Wegeventils 90 zugeführt. Wenn die Temperatur des Fluides in dem Reservoir 30 hoch ist, kann das Bypassventil 104 umgeschaltet werden, so dass der Bypassabschnitt 102 geschlossen wird. In diesem Fall wird der gesamte von der Pumpenanordnung 44" bereitgestellte Fluidvolumenstrom durch den Fluidkühler 96 zu dem Eingang des Wegeventils 90 geführt.

Die Pumpenanordnung 44" weist neben der Elektromotorpumpe 92 und dem Elektromotor 94 eine Nebenantriebspumpe 106 auf, die nach der Art eines Nebenantriebes mit dem Verbrennungsmotor 12 gekoppelt ist. Die Druckanschlüsse der Nebenantriebspumpe 106 und der Elektromotorpumpe 92 sind miteinander verbunden, wobei zwischen der Verbindung und der Elektromotorpumpe 92 ein Rückschlagventil 108 vorgesehen sein kann, das bei verbrennungsmotorischem Fahrbetrieb und nicht eingeschalteter Elektromotorpumpe 92 einen Volumenstrom in die Pumpe 92 hinein verhindert.

In der Verbindung zwischen der Nebenantriebspumpe 106 und der Verbindung der Druckanschlüsse kann ggf. ebenfalls ein Rückschlagventil vorgesehen sein.

Bei der Pumpenanordnung 44" kann ein geeigneter Fluidvolumenstrom durch reinen Betrieb der Nebenantriebspumpe 106, durch reinen Antrieb der Elektromotorpumpe 92 und/oder durch einen gemischten Betrieb dieser zwei Pumpen bereitgestellt werden.,

Die Sauganschlüsse der zwei Pumpen 92, 106 können über ein gemeinsames Filter 98 mit dem Reservoir 30 verbunden sein.

In Fig. 5 ist eine weitere Ausführungsform einer Kühlanordnung 40"' gezeigt. Bei dieser Ausführungsform weist die Pumpenanordnung 44"' eine einzelne Elektromotorpumpe 92"" auf, die mittels eines Elektromotors 94'" angetrieben wird. Die Elektromotorpumpe 92"' ist dabei als bidirektionale Pumpe ausgebildet. Ein erster Anschluss der Elektromotorpumpe 92" ist mit der Kupplungs-Fluidleitung 48 verbunden. Ein zweiter Anschluss der Elektromotorpumpe 92'" ist mit der Maschinen-Fluidleitung 50 verbunden. Die Verbindung der Anschlüsse der Elektromotorpumpe 92'" mit der Kupplungs-Fluidleitung 48 und der Maschinen-Fluidleitung 50 erfolgt über eine Rückschlagventilanordnung 110, die Teil einer Fluidverteilungseinrichtung 46'" sein kann.

Die Rückschlagventilanordnung 110 beinhaltet zwei Rückschlagventile, die die Anschlüsse der Elektromotorpumpe 92"' mit der Kupplungs-Fluidleitung 48 bzw. mit der Maschinen-Fluidleitung 50 verbinden, sowie zwei Rückschlagventile, die die gleichen Anschlüsse mit dem Reservoir 30 verbinden. Die Rückschlagventilanordnung 110 ist dazu ausgelegt, dass Fluid aus dem Reservoir 30 entweder (in der einen Drehrichtung der Elektromotorpumpe 92"') in die Kupplungs-Fluidleitung 48 gefördert wird, oder (in der anderen Drehrichtung) in die Maschinen-Fluidleitung 50.

Ein Fluidkühler 96 (mit oder ohne Bypassabschnitt 102) kann dabei in die Maschinen-Fluidleitung 50 integriert sein, wie es in Fig. 5 dargestellt ist. Alternativ oder ergänzend kann ein derartiger Fluidkühler 96 auch in der Kupplungs-Fluidleitung 48 vorgesehen sein.

Die Kupplungs-Fluidleitung 48 und die Maschinen-Fluidleitung 50 sind vorliegend über eine Blendenanordnung 114 miteinander verbunden. Die Blendenanordnung 114 sorgt dafür, dass ein gewisser Teil des in einer der Fluidleitungen bereitgestellten Fluidvolumenstromes auch der anderen Fluidleitung zur Verfügung gestellt wird. Die Blendenanordnung 114 kann dabei symmetrisch ausgebildet sein, wobei die Fluidleitungen 48, 50 über eine einfache Blende miteinander verbunden sind. In diesem Fall kann das Verhältnis der Volumenströme beispielsweise in einen Bereich von 5% / 95% bis 95% / 5% oder dergleichen eingestellt werden.

Die Blendenanordnung 114 kann jedoch auch asymmetrisch ausgebildet sein, was in Fig. 5 dargestellt ist. In diesem Fall beinhaltet die Blendenanordnung 114 neben einer die Fluidleitungen 48, 50 verbindenden Blende eine weitere parallele Verbindung, in der eine weitere Blende sowie ein Rückschlagventil angeordnet sind. Hierdurch kann gewährt beispielsweise gewährleistet werden, dass der Reibkupplungsanordnung 14' ein größerer Fluidvolumenstrom bereitgestellt wird, wenn die Elektromotorpumpe 92"' einen Fluidvolumenstrom in die Maschinen-Fluidleitung 50 führt. Anders herum wird der Maschinen-Fluidleitung 50 ein kleinerer Volumenstrom bereitgestellt, wenn die Elektromotorpumpe 92'" Fluid in die Kupplungs-Fluidleitung fördert.

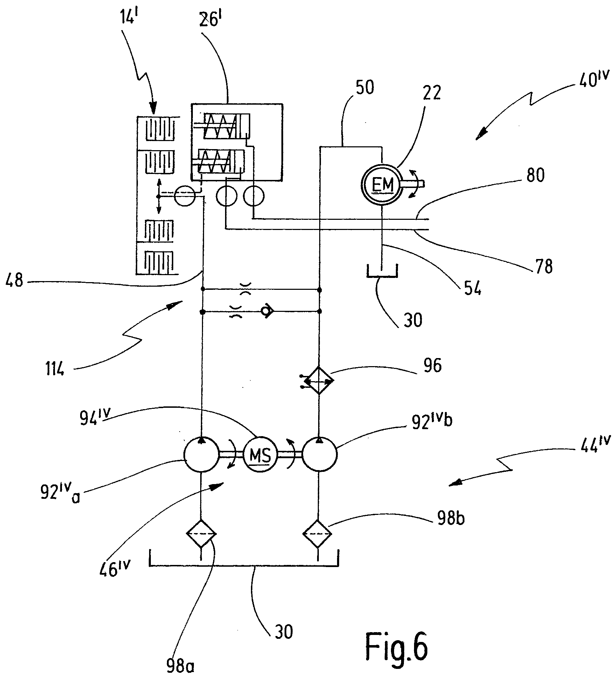

In Fig. 6 ist eine weitere Ausführungsform einer Kühlanordnung 40^{IV} dargestellt, die hinsichtlich Aufbau und Funktionsweise generell der Kühlanordnung 40"' der Fig. 5 entspricht.

In diesem Fall weist die Pumpenanordnung 44^{IV} eine Kupplungspumpe 94^{IV}a und eine Maschinenpumpe 92^{IV}b auf. Die Sauganschlüsse der Pumpen sind, ggf. über Fluidfilter 98a, 98b, mit dem Reservoir 30 verbunden. Die Druckanschlüsse der Pumpen sind mit der Kupplungs-Fluidleitung 48 bzw. der Maschinen-Fluidleitung 50 verbunden.

Die Pumpen 92^{IV}a, 92^{IV}b werden mittels eines gemeinsamen Elektromotors 94^{IV} angetrieben, und zwar mit unterschiedlichen Drehrichtungen, derart, dass ein Fluidvolumentstrom entweder in die Kupplungs-Fluidleitung 48 oder in die Maschinen-Fluidleitung 50 gefördert wird. In der Maschinen-Fluidleitung 50 kann wiederum ein Fluidkühler 96 angeordnet sein. Die Kupplungs-Fluidleitung 48 und die Maschinen-Fluidleitung 50 können wiederum über eine Blendenanordnung 114 miteinander verbunden sein.

## Patentansprüche

1. Kühlanordnung (40) für einen Kraftfahrzeugantriebsstrang (10), der eine Reibkupplungsanordnung (14) und eine elektrische Maschine (22) aufweist, mit einem Kühlfluidkreis (42), der eine Pumpenanordnung (44) zum Fördern von Fluid (32) und eine Fluidverteilungseinrichtung (46) aufweist, wobei der Kühlfluidkreis (42) so ansteuerbar ist, dass gefördertes Fluid (32) der Reibkupplungsanordnung (14) und/oder der elektrischen Maschine (22) bedarfsweise zuführbar ist,
**dadurch gekennzeichnet, dass**
die Pumpenanordnung (44^{IV}) eine Kupplungspumpe (92^{IV}a) und eine Maschinenpumpe (92^{IV}b) aufweist, die von einem einzelnen Elektromotor (94^{IV}) angetrieben sind.

2. Kühlanordnung nach Anspruch 1, wobei die Fluidverteilungsanordnung (46) eine Ventilverteilungsanordnung (90; 110) aufweist.

3. Kühlanordnung nach Anspruch 2, wobei die Ventilverteilungsanordnung (9) ein proportionales Wegeventil (90) aufweist, das einen geförderten Fluidvolumenstrom bedarfsweise auf die Reibkupplungsanordnung (14) und die elektrische Maschine (22) aufteilt.

4. Kühlanordnung nach einem der Ansprüche 1 - 3, wobei die Pumpenanordnung (44) eine Elektromotorpumpe (92; 92"'; 92^{IV}a, 92^{IV}b) aufweist, die von einem Elektromotors (94; 94"'; 94^{IV}) angetrieben ist.

5. Kühlanordnung nach einem der Ansprüche 1 - 4, wobei die Pumpenanordnung (44") eine Nebenantriebspumpe (106) aufweist, die von einem Antriebsmotors (12) des Antriebsstranges (10) angetrieben ist.

6. Kühlanordnung nach Anspruch 4 und nach Anspruch 5, wobei ein Druckanschluss der Elektromotorpumpe (92) über ein Rückschlagventil (108) mit einem Druckanschluss der Nebenantriebspumpe (106) verbunden ist.

7. Kühlanordnung nach einem der Ansprüche 1 - 6, wobei der Antriebsstrang (10) ein Getriebe (16) aufweist und wobei der Kühlfluidkreis (42) so ausgebildet ist, dass Fluid, das die elektrische Maschine (22) durchlaufen hat, dem Getriebe (16) zum Schmieren wenigstens eines Getriebegliedes (17) zugeführt wird.

8. Kühlanordnung nach einem der Ansprüche 1 - 7, wobei der Kühlfluidkreis (42) einen Fluidkühler (96) aufweist, in den das von der Pumpenanordnung (44) geförderte Fluid führbar ist.

9. Kühlanordnung nach Anspruch 8, wobei der Kühlfluidkreis (42) einen Bypassabschnitt (102) zum bedarfsweisen Umgehen des Fluidkühlers (96) aufweist.

10. Kühlanordnung nach einem der Ansprüche 1 - 9, wobei die Pumpenanordnung (44"') eine bidirektionale Pumpe (92"') aufweist und wobei die Fluidverteilungseinrichtung (46"') eine mit Anschlüssen der Pumpe (92"') verbundene Ventilanordnung (110) aufweist, derart, dass Kühlfluid in der einen Förderrichtung der Reibkupplungsanordnung (14) und in der anderen Förderrichtung der elektrischen Maschine (22) zuführbar ist.

11. Kühlanordnung nach einem der Ansprüche 1 - 10, wobei der Kühlfluidkreis eine zu der Reibkupplungsanordnung führende Kupplungs-Fluidleitung (48) und eine zu der elektrischen Maschine führende Maschinen-Fluidleitung (50) aufweist, wobei die Kupplungs-Fluidleitung (48) und die Maschinen-Fluidleitung (50) über eine Blendenanordnung (114) miteinander verbunden sind.

12. Antriebsstrang (10) für ein Kraftfahrzeug (11) mit einer Kühlanordnung (40) nach einem der Ansprüche 1 - 11.

13. Antriebsstrang nach Anspruch 12, wobei die Reibkupplungsanordnung (14) mittels eines Fluidaktuators (26) betätigt wird, der mit dem gleichen Fluid betrieben wird wie der Kühlfluidkreis (42).

## Claims

1. Cooling arrangement (40) for a motor vehicle drive train (10) which includes a friction coupling arrangement (14) and an electric machine (22), the cooling arrangement (40) comprising a cooling fluid circuit (42) which comprises a pump arrangement (44) for supplying fluid (32) and a fluid distribution device (46), wherein the cooling fluid circuit (42) is controllable such that supplied fluid (32) can be provided to the friction clutch arrangement (14) and/or to the electric machine (22), as necessary,
**characterized in that**
the pump arrangement (44^{IV}) comprises a clutch pump (92^{IV}a) and a machine pump (92^{IV}b), which are driven by a single electric motor (94^{IV}).

2. Cooling arrangement according to claim 1, wherein the fluid distribution arrangement (46) comprises a valve distribution arrangement (90; 110).

3. Cooling arrangement according to claim 2, wherein the valve distribution arrangement (9) comprises a proportional directional valve (90) which splits a supplied fluid volume flow as necessary to the friction clutch arrangement (14) and the electric machine (22).

4. Cooling arrangement according to any of claims 1 to 3, wherein the pump arrangement (44) comprises an electric motor pump (92; 92"'; 92^{IV}a, 92^{IV}b), which is driven by an electric motor (94; 94"'; 94^{IV}).

5. Cooling arrangement according to any of claims 1 to 4, wherein the pump arrangement (44") comprises an auxiliary drive pump (106) which is driven by a drive motor (12) of the drive train (10).

6. Cooling arrangement according to claim 4 and according to claim 5, wherein a pressure port of the electric motor pump (92) is connected via a check valve (108) to a pressure port of the auxiliary drive pump (106).

7. Cooling arrangement according to any of claims 1 to 6, wherein the drive train (10) comprises a transmission (16) and wherein the cooling fluid circuit (42) is formed such that fluid that has passed through the electric machine (22), is guided to the transmission (16), for lubricating at least one transmission member (17).

8. Cooling arrangement according to any of claims 1 to 7, wherein the cooling fluid circuit (42) comprises a fluid cooler (96) into which fluid supplied by the pump arrangement (44) can be guided.

9. Cooling arrangement according to claim 8, wherein the cooling fluid circuit (42) comprises a bypass portion (102) for bypassing the fluid cooler (96) as necessary.

10. Cooling arrangement according to any of claims 1 - 9, wherein the pump arrangement (44"') comprises a bi-directional pump (92"') and wherein the fluid distribution device (46"') comprises a valve arrangement (110) connected to ports of the pump (92"') such that cooling fluid can be guided in one supply direction to the friction clutch arrangement (14) and in the other supply direction to the electric machine (22).

11. Cooling arrangement according to any of claims 1 to 10, wherein the cooling fluid circuit comprises a clutch fluid line (48) leading to the friction clutch arrangement and a machine fluid line (50) leading to the electric machine, wherein the clutch fluid line (48) and the machine fluid line (50) are connected to each other via an orifice arrangement (114).

12. Drive train (10) for a motor vehicle (11), comprising a cooling arrangement (40) according to any of claims 1 to 11.

13. Drive train according to claim 12, wherein the friction clutch arrangement (14) is actuated by means of a fluidic actuator (26), which fluidic actuator is operated with the same fluid as the cooling fluid circuit (42).

## Revendications

1. Agencement de refroidissement (40) pour une chaîne cinématique de véhicule automobile (10) qui présente un agencement d'embrayage à friction (14) et une machine électrique (22), avec un circuit de fluide de refroidissement (42) qui présente un agencement de pompe (44) pour refouler du fluide (32) et un dispositif de distribution de fluide (46), le circuit de fluide de refroidissement (42) pouvant être commandé de telle sorte que du fluide transporté (32) puisse être acheminé au besoin à l'agencement d'embrayage à friction (14) et/ou à la machine électrique (22),
**caractérisé en ce que**
l'agencement de pompe (44^{IV}) présente une pompe d'embrayage (92^{IV}a) et une pompe de machine (92^{IV}b) qui sont entraînées par un moteur électrique unique (94^{IV}).

2. Agencement de refroidissement selon la revendication 1, dans lequel
l'agencement de distribution de fluide (46) présente un agencement de distribution par soupape (90 ; 110).

3. Agencement de refroidissement selon la revendication 2, dans lequel
l'agencement de distribution par soupape (9) présente une soupape de distribution proportionnelle (90) qui divise un débit volumique de fluide transporté au besoin vers l'agencement d'embrayage à friction (14) et vers la machine électrique (22).

4. Agencement de refroidissement selon l'une quelconque des revendications 1 à 3, dans lequel l'agencement de pompe (44) présente une pompe de moteur électrique (92 ; 92^{III}; 92^{IV}a, 92^{IV}b) qui est entraînée par un moteur électrique (94; 94^{III}; 94^{IV}).

5. Agencement de refroidissement selon l'une quelconque des revendications 1 à 4, dans lequel l'agencement de pompe (44^{II}) présente une pompe d'entraînement secondaire (106) qui est entraînée par un moteur d'entraînement (12) de la chaîne cinématique (10).

6. Agencement de refroidissement selon la revendication 4 et la revendication 5, dans lequel un raccord de pression de la pompe de moteur électrique (92) est connecté par le biais d'un clapet antiretour (108) à un raccord de pression de la pompe d'entraînement secondaire (106).

7. Agencement de refroidissement selon l'une quelconque des revendications 1 à 6, dans lequel la chaîne cinématique (10) présente une transmission (16) et dans lequel le circuit de fluide de refroidissement (42) est réalisé de telle sorte que du fluide qui est passé par la machine électrique (22) soit acheminé à la transmission (16) en vue de lubrifier au moins un organe de la transmission (17).

8. Agencement de refroidissement selon l'une quelconque des revendications 1 à 7, dans lequel le circuit de fluide de refroidissement (42) présente un dispositif de refroidissement de fluide (96) dans lequel le fluide refoulé par l'agencement de pompe (44) peut être guidé.

9. Agencement de refroidissement selon la revendication 8, dans lequel le circuit de fluide de refroidissement (42) présente une portion de dérivation (102) pour contourner au besoin le dispositif de refroidissement de fluide (96).

10. Agencement de refroidissement selon l'une quelconque des revendications 1 à 9, dans lequel l'agencement de pompe (44^{III}) présente une pompe bidirectionnelle (92^{III}) et dans lequel le dispositif de distribution de fluide (46^{III}) présente un agencement de soupapes (110) connecté à des raccords de la pompe (92^{III}) de telle sorte que du fluide de refroidissement puisse être acheminé à l'agencement d'embrayage à friction (14) dans une direction de refoulement et à la machine électrique (22) dans l'autre direction de refoulement.

11. Agencement de refroidissement selon l'une quelconque des revendications 1 à 10, dans lequel le circuit de fluide de refroidissement présente une conduite de fluide d'embrayage (48) conduisant à l'agencement d'embrayage à friction et une conduite de fluide de machine (50) conduisant à la machine électrique, la conduite de fluide d'embrayage (48) et la conduite de fluide de machine (50) étant raccordées l'une à l'autre par le biais d'un agencement de diaphragme (114).

12. Chaîne cinématique (10) pour un véhicule automobile (11) comprenant un agencement de refroidissement (40) selon l'une quelconque des revendications 1 à 11.

13. Chaîne cinématique selon la revendication 12, dans laquelle l'agencement d'embrayage à friction (14) est actionné au moyen d'un actionneur fluidique (26) qui est entraîné avec le même fluide que le circuit de fluide de refroidissement (42).
